Europäisches Patentamt

European Patent Office

Office européen des brevets

(19)

(11) Publication number: **0 130 391**
A2

(12)

# EUROPEAN PATENT APPLICATION

(21) Application number: **84106279.7**

(22) Date of filing: **01.06.84**

(51) Int. Cl.⁴: **G 11 B 7/00, G 11 C 13/04**

(30) Priority: **02.06.83 NZ 204449**

(71) Applicant: **ANDROS RESEARCH LIMITED, Suite 507, T & G Building Cnr Wellesley & Elliott Streets, Auckland (NZ)**

(43) Date of publication of application: **09.01.85 Bulletin 85/2**

(72) Inventor: **Holmes, Stewart John, Unit J/15 Roseberry Avenue, Birkenhead Auckland (NZ)**
Inventor: **Keam, Nigel Stuart, Unit F/15 Roseberry Avenue, Birkenhead Auckland (NZ)**

(84) Designated Contracting States: **AT BE CH DE FR GB IT LI LU NL SE**

(74) Representative: **Kador . Klunker . Schmitt-Nilson . Hirsch, Corneliusstrasse 15, D-8000 München 5 (DE)**

(54) **A method of, and apparatus for, retrieval of information from an optical medium, and optical media.**

(57) Digital data, for a computer or similar device, is encoded onto photographic film, paper, or other flat medium to be read optically by a data reader. The data reader may also read analogue data (such as pictures) in digital form. The data is stored in two-dimensional format, and read back by a point or one-dimensional scanner. The medium may typically be in the form of a strip, roll, card, disc or cassette.

EP 0 130 391 A2

# A Method of, and Apparatus for, Retrieval of Information from an Optical Medium, and Optical Media

This invention relates to a method of storage of information on, and retrieval of information from, an optical medium. It provides, furthermore, a variety of apparatus for performance of the method of the invention, and preferred optical storage media.

The invention relates primarily to a method and various apparatus for the storage and retention of a wide variety of types of information including data, computer programs, and other information in either digital or analogue format. In addition, the invention provides a variety of preferred embodiments of optical media to be used in accordance with the invention.

Historically, there have been a number of developments in technology concerning storage and retention of information, including punched paper tape, magnetic tape, magnetic discs, and laser discs. Furthermore, it has been known to provide electro-optic techniques, which have enabled the use of read-only memories employing photographic film to record information. Up until recently, there have been significant technological disadvantages in providing both methods and apparatus capable of permitting retrieval of information from photographic film by electro-optic processing, since the available hardware has not been compatible in size or cost with the highly developed microprocessor or "chip" technology with which the electro-optic retrieval might best be combined in a significant range of uses. However, recent developments in scanner technology provide, when used in the method and apparatus of this invention, a substantial advance in electro-optic retrieval systems and technology, and the associated uses and practical adaptations of optical storage and retrieval systems.

Until now, the only known advance in this technology has been that disclosed in the US Navy United States patent specification 3,952,290 (Williams) dated 20 April 1976. This specification describes the background of the technology, and a method of storage and retrieval of information from an optical medium using a two-dimensional storage system, and a precisely aligned two-dimensional retrieval system. While the system is reasonably compact in size, the substantial disadvantage for practical use is that the critical alignment of the storage medium relative to the retrieval apparatus is fundamental to the accurate retrieval of the information.

The present invention is a development of the technology in a manner which provides all of the advantages of photographic storage, and which furthermore enables convenient, efficient, and accurate retrieval of the information so stored. It may be loosely described under the heading of "Two-dimensional optical data storage", although this does not cover all aspects of the invention.

The original concept came from the realization that photographic film provides a cheap, high-density information storage medium, that can be scanned by low-cost electronic devices coupled with specialised software algorithms to yield a reliable storage system.

It will therefore be appreciated that it is an object of this invention to provide an efficient method of and apparatus for storage and retrieval of information. Furthermore, depending upon available hardware technology, and the combinations which are used, the invention may be utilized to provide a wide range of functions in the storage and retrieval of information or library functions, computer programs, including substitute programs, and audiovisual and other communications interfaces and complete systems. For example, it is envisaged in embodiments of this invention, described below, that the invention could be utilized in relation to an extremely wide variety of functions in which the storage and retrieval of information is required in either digital or analogue form. The invention will be described with particular reference to the general method of performance of the invention and preferred apparatus and optical medium.

Accordingly, in a first aspect, the present invention broadly consists in a method of retrieving information from an optical medium comprising a plurality of discrete increments of recorded information defined by variations in opacity in a two-dimensional array, the method comprising the steps of moving the optical medium relative to a one or zero dimensional scanner capable of receiving light from said optical medium.

In a second aspect, the present invention broadly consists in a method of retrieving information, the method comprising the steps of:

(a) providing an optical medium comprising a plurality of discrete increments of recorded information defined by variations in opacity;

(b) providing a light source to illuminate said optical medium;

(c) providing a zero or one dimensional scanner capable of receiving light from said medium and adapted to develop an electronic signal corresponding to the discrete increments of recorded information;

(d) moving the medium relative to the scanner to receive the information; and

(e) transferring said received information from said scanner for analysis.

In a third aspect, the present invention broadly consists in a method of storing and retrieving information in an optical medium, the method comprising the steps of:

(a) providing an optical medium with a two dimensional array of discrete increments of recorded information defined by variations in opacity, said two dimensional array including an address region, a critical edge or margin portion, a clock region, a data region including said recorded information and an error control region;

(b) providing a reader apparatus for said optical medium including a light source, and a zero or one dimensional scanner apparatus, being a single or multi-element light-sensitive device;

(c) illuminating said optical medium by said light source and moving said optical medium relative to said scanner apparatus to develop a charge in each element in said scanner, said charge being representative of the recorded information; and

(d) transferring said charges out of the elements of said scanner for further analysis.

In a fourth aspect, the present invention broadly consists in a method of storing or retrieving information as defined in one of the preceding three paragraphs, further comprising the step of using analysis-performing hardware or software to carry out the following functions:

(a) Critical edge reading - to evaluate the position of the clock, data, and error control regions accurately;

(b) Clock region reading - to determine the position of the optical medium relative to the scanner for correct line by line processing of the information; and

(c) Error control reading - to detect correct and eliminate any errors;

and wherein the analysed information is transferred in processed format to memory or for further processing.

In a fifth aspect, the present invention broadly consists in an optical medium arranged substantially in two dimensional form and including a data area on the medium comprising a critical edge section of data adjacent one edge of the optical medium, a clock region, a data region to receive recorded information, and an error control region, all of said regions being aligned with the critical edge section.

In a sixth aspect, the present invention broadly consists in a medium as defined in the preceding paragraph, provided in a form of consecutive data blocks each including a plurality of points of information and with a preceding address line, and (optionally) a header or validity region adjacent to commencement portion or end of said medium.

Preferably, the optical medium is a photographically prepared microfilm or a pressed or printed optical medium arranged in strip, roll, disc, cassette or card format.

In a seventh aspect, the present invention broadly consists in an apparatus for retrieval of information stored on an optical medium, said retrieval apparatus including a light source, and a zero dimensional (single element) or one dimensional (multi-element) scanner adapted to develop a charge in each element, an amplifier for said charge, an analogue to digital converter, a shift register for transferring said charges out of said scanner device, and an analysis means as follows:

(a) critical edge processor - to evaluate accurately the position of clock data and error control regions of the medium;

(b) clock processor - to determine the position of the optical medium relative to the scanner for correct line by line processing of the information;

(c) error control processor - to detect, correct and eliminate any error; and

(d) means for transferring the analysed information in processed format to memory or for further processing;

the construction and arrangement being such that, in use, said optical medium is illuminated by said light source and moved relative to, and read by, said scanner to provide said information for analysis by the retrieval apparatus.

Preferably, the retrieval apparatus provides for the optical medium to be moved between a light source and said scanner either manually, or by controlled motive power source provided in said retrieval apparatus.

The above gives a broad description of the present invention, a preferred form of which will now be described by way of example with reference to the accompanying drawings in which:

Figure 1 is a schematic diagram of the internal arrangement of one preferred data loader of the invention;

Figure 2 is a representation of the format for one preferred embodiment of the optical medium according to the invention;

Figure 3 is a schematic diagram of the physical layout of one preferred retrieval apparatus of the invention;

Figure 4 is a schematic diagram similar to Figure 1, showing the internal arrangement of another preferred embodiment of the invention;

Figure 5 is a representation of the format for a second preferred embodiment of the optical medium according to the invention;

Figure 6 is a schematic diagram of the physical layout for another

0130391

preferred retrieval apparatus of the invention;

Figure 7 shows a detail of the apparatus of Figure 6;

Figure 8 is a schematic diagram of the internal arrangement for a third data loader of the invention;

Figure 9 is a schematic diagram of the format for a preferred optical medium for use with the apparatus of Figure 8;

Figure 10 is a schematic diagram of the physical layout of a retrieval apparatus of the type illustrated in Figure 8;

Figure 11 is a diagrammatic representation of a data cartridge for use in an apparatus of Figure 10;

Figure 12 is a schematic diagram of an alternative physical layout of a retrieval apparatus of the type illustrated in Figure 8;

Figure 13 is a diagrammatic representation of a data cartridge for use in an apparatus of Figure 12;

Figure 14 is a preferred circuit diagram for part of the apparatus shown in Figure 1;

Figure 15 is a preferred circuit diagram for another part of the apparatus of Figure 1; and

Figure 16 is a circuit diagram of a third part of the apparatus of Figure 1.

The fundamental advance in the invention over the prior art resides in the method of retrieval of optically stored information, and the resulting form of optical medium. The storage of information in digital or analogue form on an optical medium, (such as photographic film, paper or other printed or pressed medium) enables a particularly low cost and high density form of storage. Furthermore, in some preferred forms of this invention, the information is able to be retrieved by simple scanning devices to enable immediate use in a wide range of applications. In other embodiments, the scanning of the information may be under computer

0130391

control, enabling automatic searching operations to give true computer data base performance. Furthermore, while the normal operation of the invention is to be read-only memory, write versions may be possible, and are briefly discussed herein.

The invention, by utilizing a two dimensional storage medium and a one dimensional (or, optionally, zero dimensional) scanner, enables both non-critical movement and alignment of the optically stored information with the scanner in retrieval of the information.

The invention will now be described with reference to the various components, which have been divided into the following five headings:

A:    MEDIA (1. Physical media; 2. Media surface)
B:    OPTICS (1. Light transmission; 2. Light pickup; 3. Light sensor)
C:    MECHANICS (1. Tracking; 2. Motors; 3. Medium Movement; 4. Head movement)
D:    DATA FORMAT (1. Type; 2. Clocking)
E:    OUTPUT (1. Output device; 2. Alphanumeric Format; 3. Graphics format; 4. Write device)

For most of these sections there is a variety of possible options, due to the variety of different ways this invention may be implemented, depending on the particular application in which the invention is to be utilized:

A1:  Physical Media: (a) Card, (b) Strip, (c) Cartridge, (d) Cassette, (e) Disk, (f) Drum
A2:  Media Surface: (a) Smooth, (b) Grooved
B1:  Light Transmission: (a) Transmissive, (b) Reflective
B2:  Light Pickup: (a) Direct, (b) Hole, (c) Lens, (d) Optic fibre(s)
B3:  Light Sensor: (a) CCD Dot, (b) CCD Strip, (c) CCD Array, (d) Single Sensor, (e) Multiple Sensor
C1:  Tracking Mechanism
C2:  Motors: (a) Stepper and Non-stepper motors, (b) Hand movement, (c) Combination of these
C3:  Medium Movement: (a) "Fixed" Medium, (b) One dimension of movement
C4:  Head Movement: (a) Fixed head(s), (b) One, (c) two and (d) three dimensions of movement
D1:  Data Format Type: (a) Binary, (b) Colour, (c) Intensity
D2:  Clocking: (a) Self clocking, (b) Separate clocking track(s)

E1:  Output Device: (a) LCD, (b) LED, (c) Plasma, (d) Flat CRT, (e) Other E2:  Alphanumeric Format

E3:  Graphics Format: (a) Dot Addressable, (b) Programmable Characters, (c) Analogue images, (d) Combinations

E4:  Write Device: (a) Photographic, (b) Thermal, (c) Printing, (d) Pressing

These options are normally mutually exclusive within any one section, and so a desired configuration may be chosen by selecting one option from each section (although some sections, such as E2 and E3, could be omitted in some applications). Note that not all combinations are viable and, where possible, this is explained in the accompanying text. For example, A1a, A2a, B1a, B2c, B3b, C2a, C3a, C4b, D1b, D2a, E1a, E2, E3c, E4a denotes one particular combination of options.

A: MEDIA

All of the media described below use a common principle for storage and similar optical (and, where necessary, mechanical) arrangements for scanning. They may be either plastics (such as cellulose, acetate or the like) or paper based, with a photographic emulsion exposed to produce the data pattern, or printed by normal press techniques. The former allows data resolution in excess of 80 bits/mm while the latter cannot be used over 8 bits/mm although it is much cheaper to mass produce.

| RESOLUTION (BITS/MM) | CAPACITY (UNFORMATTED BYTES/SQ MM) |
|---|---|
| 8 | 6 |
| 20 | 40 |
| 50 | 250 |
| 80 | 640 |

From this table the following media can be compared with respect to a standard paperback book consisting of 120 pages of 40 lines of 60 characters (i.e., 300 kilobytes). Note that this example is given for guidance only and takes no account of the necessary tracking and data error correcting techniques, which will reduce the effective storage capacities in some cases substantially.

0130391

A1: Physical Media

A1(a): Card

This is a thin flexible card, typically 150 mm x 100 mm (600 kilobytes at 20 b/mm), with a 25 mm tab with which to handle the card and also carry directly readable information as to the card's contents. This lends itself particularly to automatic loading of multiple cards (such as in a peripheral card sorter/feeder).

A1(b): Strip

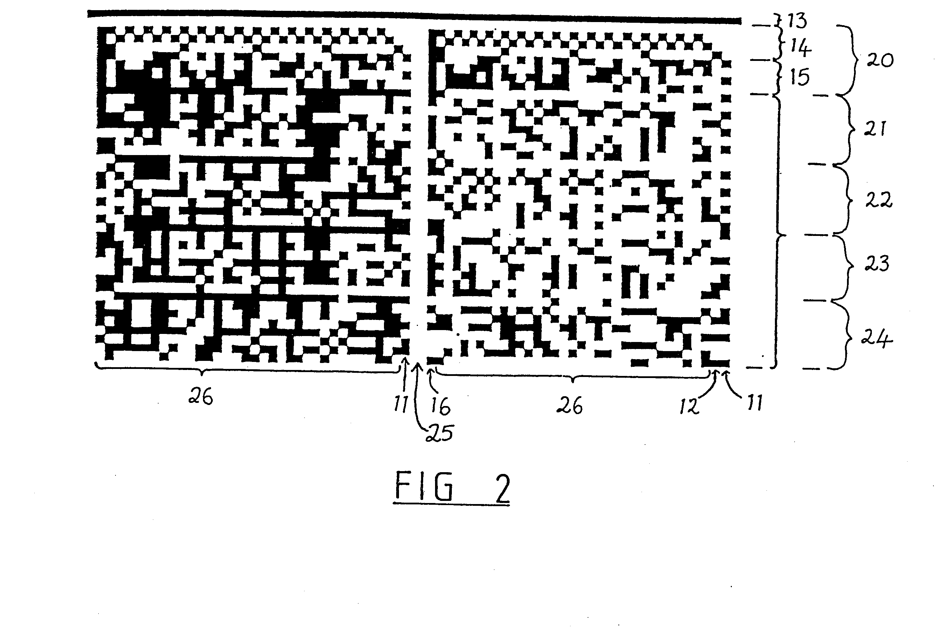

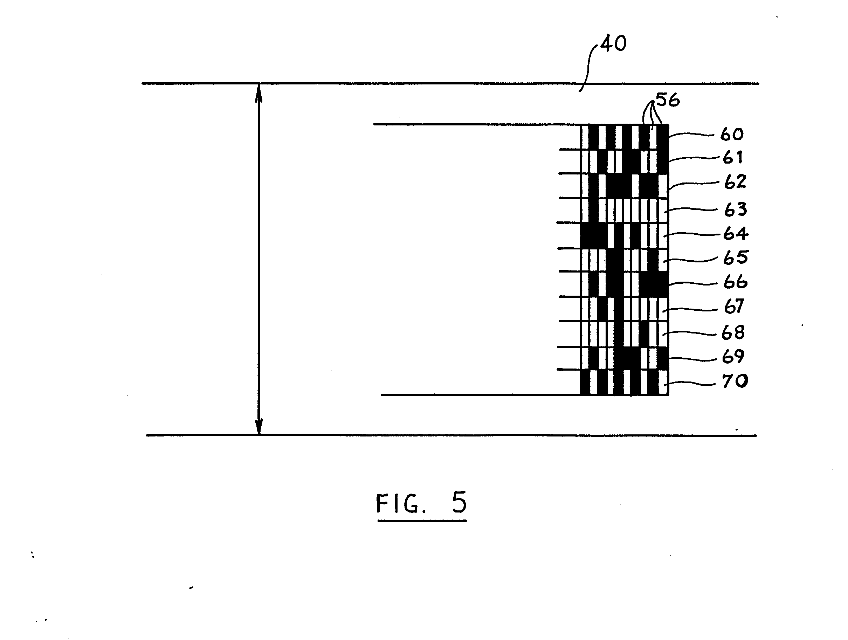

This is considered the most useful form of the invention. A photographic strip may be provided, having a width of, for example, four bytes of information, and of indeterminate length. The strip could be provided of any suitable material and, for short programs, could be provided in flat strip form or, alternatively, in cartridge, cassette or disc form (as described below). Two preferred strip forms of the invention are shown in Figures 2 and 5 of the drawings, which are explained below.

It is to be appreciated that a huge quantity of information can be stored by this method. For instance, a 100 mm x 6 m strip gives 1.2 megabytes at 20 b/mm. The preferred strip would, however, be only 5 mm to 20 mm in width in most applications. One preferred application uses a strip with a width of 16 mm.

A1(c): Cartridge

In applications where the required data storage could not fit onto a convenient sized card or strip, a cartridge carrier (or spools) could be used and fitted into the reader in much the same way as normal camera film is loaded. Cartridges up to 100 mm x 6 m are easily attained giving 24 megabytes at 20 b/mm.

A1(d): Cassette

This is another version of the cartridge, except that the medium can be packaged in a standard (normal or dictaphone) cassette. The preferred medium is, however, a thinner film of, say, five millimetres to ten millimetres in width. A standard dictaphone cassette (85 m long) could store ten megabytes at 20 b/mm. The mechanism is almost identical to those used for audio cassettes with the magnetic head replaced by an optical scanner, such as a charge-coupled device (CCD), for example.

A1(e): Disk

The traditional storage medium of disks is just as viable with this system, and standard floppy disk format and packing can be used. However, the mechanism for loading a disk is more complex than for cassette, although this can be offset by the ability to use a simpler drive mechanism. Assuming a 50 mm radial active area on a 133 mm disk (the same size as a standard magnetic mini-floppy diskette), over 300 kilobytes could be stored at 20 b/mm.

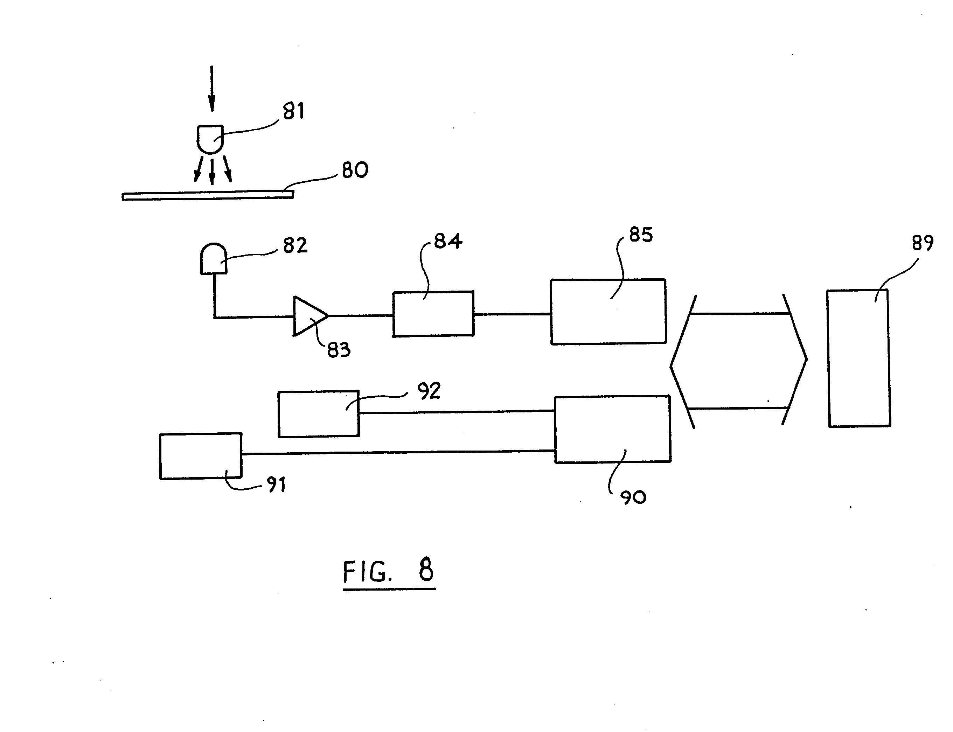

One preferred disk is described below with reference to Figure 8 of the accompanying drawings.

A1(f): Drum

The drum is, effectively, simply a rolled card or strip. Its main feature is that it offers simplified drive and tracking mechanisms but, like the disk, it does not lend itself to extensions either by increasing the surface area or by automatically loading multiple media.

A2: Media Surface

In the preferred form of the invention, smooth medium should be used, since it permits storage of information at a maximum density in both X and Y directions. Grooved or indexed surfaces should be used only where complex tracking mechanisms are required.

In a preferred form of the invention the medium is provided with certain data format characteristics, as described in section D2 (below), which do away with the requirement for accurate tracking and enable a smooth surface medium to be used.

## B: OPTICS

### B1: Light Transmission

Transmissive light is generally preferred to reflective light, and requires only that an even illumination be provided over the medium at the point where it is being scanned. However, transmissive light is effective only on transparent media (such as film, not paper). The advantage of transmissive light is that it permits the use of lower sensitivity sensors and correspondingly small data increments (bit size). This of course has advantages in terms of storage capacity.

The alternative form of light transmission is reflective light which, in some high technology uses, may be advantageous, notwithstanding that its light level is lower than that for transmissive light, where advanced sensors may be used.

### B2: Light Pickup

This may sometimes be necessary, depending upon the method of light transmission and the sensor which is used, so that the light may be piped from the medium to the sensor. Secondly, it enables the area of interest to be masked off or focused if the sensor is incapable of resolving the required size of data bit.

### B2(a): Direct

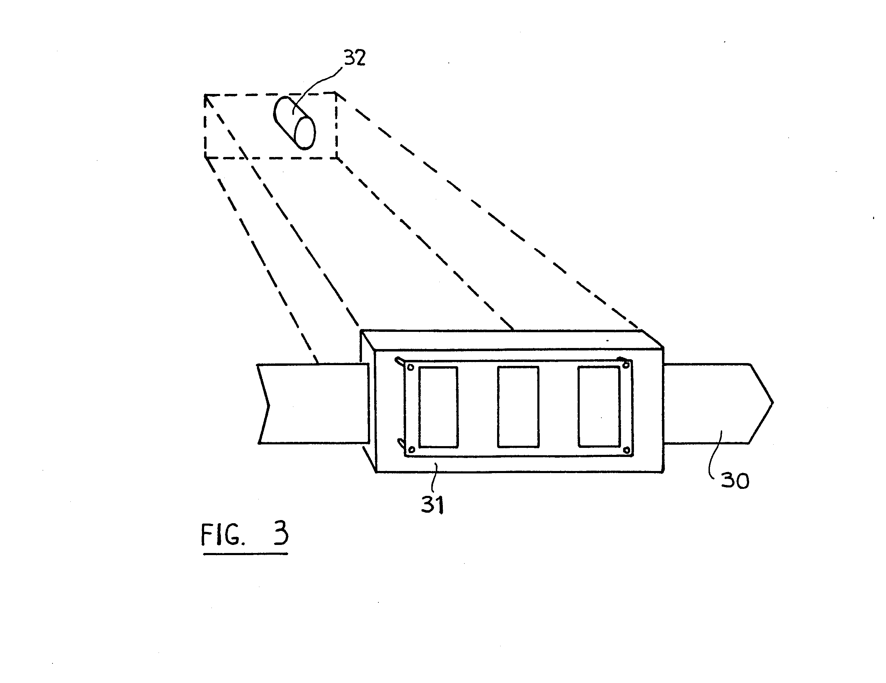

The preferred form of pickup is by direct light from the medium, usually with the sensor pressed against or located immediately adjacent to the medium. This requires a sensor with a fine resolution, such as a CCD strip as described in section B3(b). This is employed in the embodiment of the invention shown in Figure 3 of the drawings, which uses a small (typically battery powered) light source sufficiently remote from the optical medium to provide an effective point source.

### B2(b): Hole

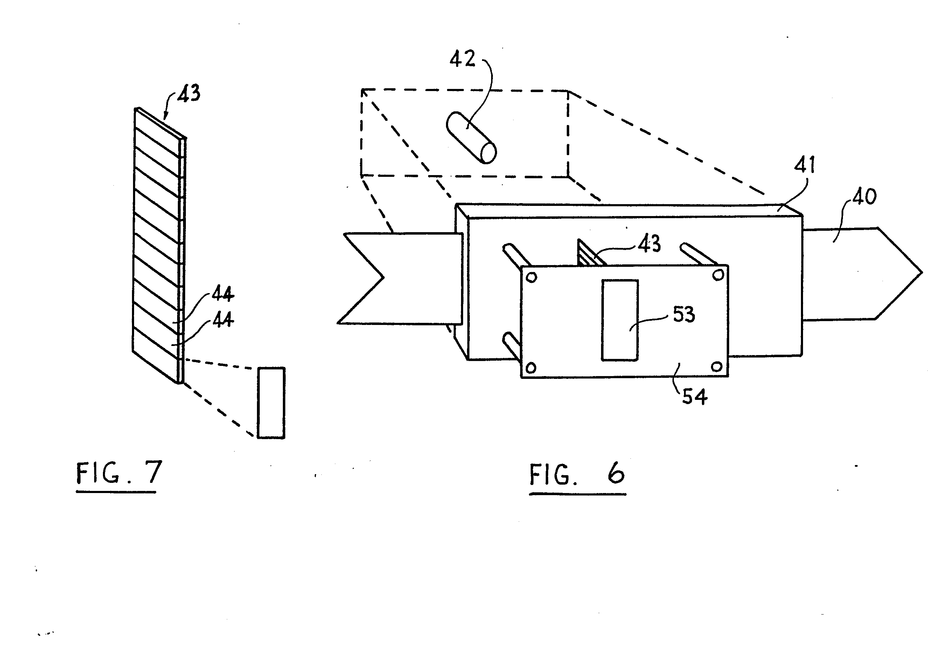

A fine hole or other aperture (see Figure 6) can be used to blank out light from all but the region of interest to the sensor.

B2(c): Lens

A lens (or lenses) may be used to focus and magnify the area of interest from the medium up to a size suitable for the sensor. This method can be difficult to implement in a small area due to the required optical separation.

B2(d): Optic fibres

Optical fibres can be used to transfer the light from a pickup point on the medium to a remote sensor. This can also be considered as a mask, like that described in section B2(b) above, as very fine fibres (less than 50 microns) are available. Thus a very precise optical head can be made by using a shielded optical fibre of the required data bit size leading into a normal sensor.

B3: Light sensor

The sensor must be capable of detecting and resolving the light level(s) corresponding to the encoded data on the medium. The different types of sensor primarily reflect different approaches to tracking the stored data and can be considered in the following categories:

B3(a): CCD Dot

A CCD (charge-coupled device) element can be integrated into a very small area on a chip and serves as an accurate image sensor. The CCD dot is effectively a zero dimensional sensor element.

B3(b): CCD Strip

An extremely efficient (mechanically) method of resolving optical data is to use a linear CCD image sensor. These are available with up to 4096 sensing elements integrated onto a 50 mm strip, and are perfect for accurately scanning a smooth medium (such as card or the like) with no additional optics. This type of strip, providing a one dimensional sensor, is considered adaptable to most of the preferred uses of the invention, and is the type used for a scanner apparatus in the embodiment shown for example in Figure 3 of the drawings.

While the CCD strip is expensive, it is quite viable in high volume applications. In preferred embodiments the sensor is of sufficient length to cover all of one axis of the medium so that the only mechanical movement required is to rotate or shift the medium surface under the sensor by manual or efficient mechanical means, since high precision is not required.

B3(c): CCD Array

An alternative form of CCD sensor comprises a two dimensional array of integrated sensing elements such as those used in solid state cameras. These require a two-dimensional movement to scan the medium, but they allow imprecise mechanical movements and low overhead tracking with the use of image analysis after the image has been scanned. These devices do not usually require a light pickup.

B3(d): Single Sensor

A further possibility is a single light sensor (such as a phototransistor or the like) but this has the disadvantage of requiring precise tracking methods to be adopted in order to scan the medium reliably. Furthermore, it requires a suitable light pickup to narrow the field of interest.

B3(e): Multiple Sensor

Multiple sensors may be used in the same way as a single sensor to provide a one-dimensional scanner, but have the disadvantage of requiring precise mechanical alignment of the medium. This disadvantage is overcome in the preferred embodiments by use of a CCD strip. However, in some cases, it may instead be overcome by suitable formatting of the optical medium (see Figure 5).

C: MECHANICS

C1: Tracking Mechanisms

In most preferred embodiments tracking mechanisms will not be required, since the medium surface, which will be smooth, will incorporate regions as described above to enable accurate retrieval of the information.

It is envisaged that a tracking mechanism would be required for the medium only in a particularly high density storage arrangement utilizing exceedingly accurate one dimensional scanners.

C2: Motors

If a tracking mechanism is used, however, a motor drive source will be necessary. Obvious applications of motor drives will include geared motors or precision stepper motors in certain precise applications. In this mode, the invention becomes comparable to a high precision, multiple track, bar code wand, but is still viable. Furthermore, the motor systems will enable seek operations to be performed in large library or information storage systems.

C3: Medium Movement

In the preferred embodiments, the medium will move rather than the scanning apparatus to provide the relative movement between the two. In this arrangement, the movement may either be simple manual movement, or motorized systems with analysis being used in both instances to handle imprecise variations in speed of the medium movement relative to the scanner.

C4: Head Movement

It is generally envisaged that head movement may be utilized only in relation to single element (zero dimensional) scanners, or possibly in instances where precision is required due to the small size and high density storage of the information. Other arrangements may be used, however, without departing from the invention.

D: DATA FORMAT

D1: Data Format Type

In preferred embodiments the data is encoded digitally, although many variations are possible. Straight binary code (a) is the most reliable, but to get more data resolution from an optically accurate medium, such as film, different schemes may be adopted where multiple light levels are significant. Intensity modulation (c) may be used on black and white film

0130391

and colour modulation (b) on colour film. Although many levels are possible, up to, say, eight levels per pixel may be considered suitable for reasonable reliability.

D2: Clocking (&c)

To enable smooth medium surface and to do away with physical tracking systems the invention provides a data format with tracking information adapted to be analysed by the method and apparatus of the invention. The data format, as shown in Figure 2 of the drawings, includes the following:

1. Header region 11 - This is a row of data provided at the commencement of the medium (at the right hand edge of the film segment illustrated in Figure 2) to validate the information that follows. The following row 12 comprises an address line.

2. Scanner/medium ratio - There is an accurate size ratio of 1:3 of scanner element size: information unit size. In other words, the pixels on the film are three times the width of the scanner elements. The scanner is thereby able to determine variation in position and more accurately receive the information.

3. Critical edge 13 - This is typically provided along the length of the strip (or card) to provide for evaluation of the position of the clock data and error control regions accurately, thus making alignment of the medium with respect to the scanner non-critical. The critical line is used to trigger the input circuitry of the scanner and never appears to the input program.

4. Clock region 14 - In conjunction with the address lines 12 this is used to determine the current position of the medium so that the information can be read correctly, notwithstanding any uneven movement of the medium relative to the scanner.

5. Error control region 15 - This is used to ensure that the data region is read correctly, thus detecting errors, such as those which may be due to dust or other extraneous material on the medium. Any errors may be detected because all data is stored twice in a different place on the medium. Therefore, errors detected on one scan are corrected on the next scan of the material. The error control is typically a row-by-row checksum of the data across the medium. There may also be a checksum or other error control row 16 at the end of each block of data.

The clock and error control regions together comprise a first byte 20 of the information encoded row-by-row across the medium. The remaining regions 21 to 24 comprise four bytes of program or other data. Blank transverse rows 25 separate the data into separate copies 26. In the illustrated embodiment, each copy comprises 128 bytes. (That is, thirty-two rows of data at four eight-bit bytes per row.) The two copies together make up a "page" of data.

As described below, pages of program data may have, interspersed among them, pages of analogue picture data. If desired, a complete detailed picture for displaying on a video screen or the like may be made up of several picture segments spread over several "pages" of the medium.

The programs stored on the film are, accordingly, divided up into 128-byte blocks, and each block is contained in a separate page. The two copies of the data per page enable the loader to avoid dust errors. The second copy is preferably formatted slightly differently, but this will be discussed later.

The Header code line 11 is, typically, the hexadecimal string: 0A AA 55 96 69 for the first copy and 0A AA 55 96 96 for the second copy. The address line 12 contains the start address for this block in bytes 1 and 2, and the end address of the entire program in bytes 3 and 4. The checksum line 16 is the exclusive-or of all the other lines, including data lines, header and address lines.

The second copy has the same format as the first copy, but the header line is altered as described above and the other lines are encoded by having their bytes 1 to 4 (or 21 to 24 in Figure 2) all exclusive-ored with the hexadecimal number AA and then the order of bytes 1 to 4 are reversed. This eliminates problems with weak spots and the scanner failing to observe particular patterns, such as extremely large areas of black or white. The byte 20 of Figure 2 is not altered, however.

There is preferably a header page which precedes the data page. It contains large areas of black with white dots and vice-versa, and is used to establish a reasonable black-white threshold.

As the film is being read each line first appears in temporary locations in RAM used for holding input. It is then transferred to bytes 20 to 24 and its checksum is validated, and the number of sequential appearances is counted. This information is stored in a byte in RAM containing the "priority" of the line, which is to say an indication of how sure the computer is that this section of data is correct, based on how many times it was seen, which also contains certain flag-holes for later use.

(This "priority" byte is made up as follows:
bit 0: Argument bit, set if there was another line with different data
bits 1 to 4: Frequency counter
bit 5: Clock bit, set if clock correct
bit 6: Checksum bit, set if checksum correct
bit 7: Set if clock "out" (i.e. lost) (use two's complement comparison))

The priority byte, and bytes 20 to 24, are then stored (if the priority is good enough) in the appropriate line of Buffer 1 (for copy 1) or 2, in RAM. Thus, each of the 35 lines of Buffers 1 and 2 contains six bytes.

Once Buffers 1 and 2 are full, the lines are "voted on" and the best version of each line is stored in the output buffer. Only bytes 1 to 4 are stored here, so that there are 35 lines of four bytes each in the output buffer. Various methods of "voting" are tried to make the checksum come out correctly.

Once the output buffer is deemed correct, the data in lines 2 to 33 (that is, the actual data) are placed in the region of RAM indicated by the address line. (The data now comprise exactly 128 bytes.)

E: OUTPUT

The principal object of the invention is to retrieve the information in any electronically compatible and usable form with a wide range of potential applications. One significant advantage is that the information can be stored in digital or analogue form but can always be retrieved in digital form. (See section E2.)

## E1: Output Device

Output devices are dependent upon the wide range of proposed uses of the invention, which include such things as a software loader, an electronic book, a digital audio system, an archival data base, and a computer data base. (Each of these is described briefly below.)

### E1(a): LCD

Liquid crystal devices are particularly suitable for applications, such as the electronic book, where low power consumption and portability are important considerations. However, there are disadvantages in the low resolution of such devices, and their difficulty in handling colours. These problems may be solved as the technology for miniature solid-state colour television devices is developed.

### E2(b): LED

Light emitting diodes may be used for small-screen displays, or for displays where power consumption is not an important factor.

### E2(c): Plasma

Again, plasma tube displays may be used where only a small amount of information (typically one line of text) is required to be displayed at a time, and where a mains power supply can be used.

### E2(d): Flat CRT

The flat CRT may be particularly suitable for the electronic book described below, and for portable electronic games apparatus.

### E2(e): Other

Other displays include ordinary CRT displays, as found, for example in many computer terminals and television sets, and large displays using ordinary electric light bulbs, such as score boards at large sports fields, and advertising billboards with animated displays.

0130391

E2: Alphanumeric Format

In some applications, such as the electronic book, the invention is used to display text in a form that is easily assimilated by the human eye. Liquid crystal displays of several lines of eighty characters each may be used for this purpose.

E3: Graphics Format

The ability to display graphics is also desirable in many applications of the invention, such as to display pictorial information alongside text. Unfortunately, graphics requires much more digital storage than text, and so should be used in moderation. Colour is particularly difficult with present-day display technologies, and other mechanisms could be used to give high quality colour images, such as additional printed sheets, or auxiliary slide viewers.

E3(a): Dot Addressable

The most versatile graphic display is provided by dot addressable display devices, but this also requires the highest storage overhead. This method is suitable where there are varied graphics shades, and digital analysis is required.

E3(b): Programmable Characters

This method is the most efficient in terms of storage. Each data byte may be treated as a standard alphanumeric character or a predefined graphics block or special symbol. This is particularly suitable where no more than a few hundred different blocks are required. These can be easily encoded and mixed with standard text codes.

E3(c): Analogue

This is the most effective method of providing graphic images of medium resolution (if a suitable output device is available) without wasting large amounts of storage capacity on the medium. Effectively, this is a modification of standard microfiche storage (photographically reduced analogue images), with the image mixed in with the text data. The image is read by the same sensors as text but is not encoded digitally.

Thus, digital data and analogue images may be freely mixed on a block by block basis with header information specifying whether a given block should be interpreted as analogue or digital. With this method; colour and/or higher resolution information may be encoded in successive blocks on a black-and-white or other monochromatic photographic medium (in other words, one block each for the red, green and blue components of a picture).

As the head scans the image, it converts the analogue data into digital and displays it accordingly. It will be appreciated that this has a significant cost advantage over the prior art, with its necessity to digitize analogue information prior to storage, rather than storing the information in analogue form, and instantly retrieving it in digital form for further use.

## E4: Write Device

Various mechanisms are possible to enable users to write information onto their own media.

E4(a): Photographic

Since the medium expected to be used most commonly is photographic film, photographic techniques will likely be the most commonly used for write operations. Normal exposure can be employed together with various other types of processing and fixing if the situation is not suitable for standard wet developing (such as diazo, photochromic or similar processes). The advantage of this is that it makes use of a technology that is already well established, but this advantage is offset by the multiple (and often difficult or messy) steps required for developing and fixing conventional photographic film. This is probably the best system for mass production. There are various ways in which the photographs can be taken, including, for example, direct photography of a computer screen, and direct computer output to film, such as is already used for preparing microfilm from computer data.

E4(b): Thermal

A preferred method for writing digital information to the medium is the use of thermally (as opposed to optically) sensitive film. With this arrangement, standard thermal printer head technology can be adopted to print any desired data format onto the medium. This is fast, clean, and cheap for small scale applications, but is less suitable for mass production.

E4(c): Printing

In applications where higher resolution is not required, normal printing processes may be used to produce an image on an optical medium. Examples include plotters, computer printers (either dot matrix, or daisy-wheel with a suitable print face, or any other) and offset printers for mass production.

E4(d): Pressing

In some areas, (particularly those using reflective light) a pressed medium (similar to a Long-Play gramophone record, for example) may be used. This would be suited only to mass production.

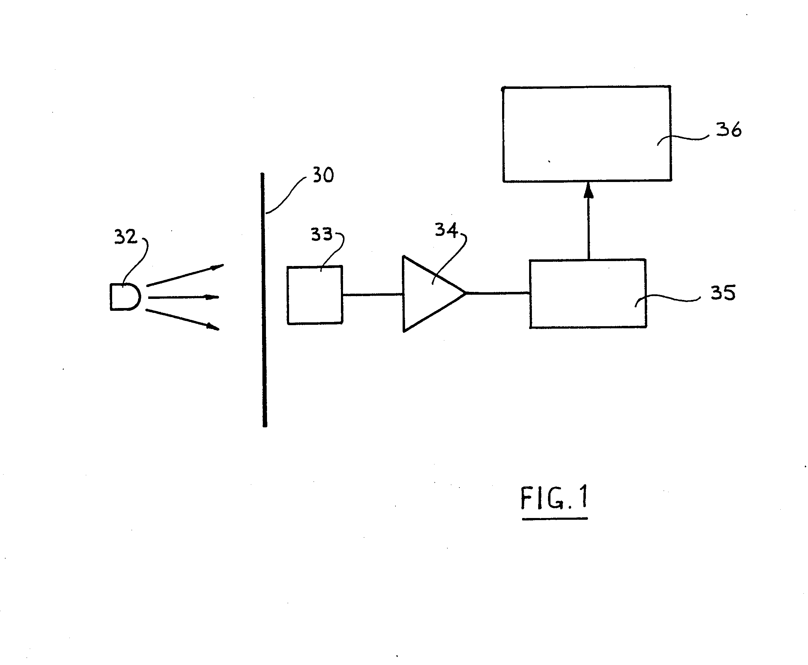

Turning now more particularly to the drawings, Figures 1 and 3 illustrate an arrangement for a data loader of the present invention for use with a strip of film. The function of this device is to scan the pattern of intensity recorded on a piece of 16 mm microfilm and reconstitute this into digital information, such as a computer program. The film 30 (shown in more detail in Figure 2) is passed through a film guide 31 between a light source 32, typically an infra-red light-emitting diode (LED), and a sensor 33, typically a charge-coupled device such as a linear image scanner. The film guide holds the film accurately with respect to the CCD scanner. The sensor 33 provides a signal in accordance with the light it receives through the film, and an analogue-digital converter 34 renders the signal into a form intelligible to a digital preprocessor 35, typically a CMOS device. The preprocessor in turn feeds the signal as input data or program to a host computer 36 in a form suitable for the software analysis. (In the following description it is assumed that the host computer is a small, portable, battery-operated device, such as that sold under the name of Epson HX-20.)

The sensor 33, analogue-digital converter 34 and preprocessor 35 may all be mounted within the housing of the film guide 31, typically in the form of three integrated-circuit chips.

Motive power for the film strip may be provided by hand, and so there need not be any moving parts in the design.

Critical setup parameters may be kept to a minimum by the use of software tracking on the comparator threshold, but several mechanical alignment factors must be correct in order for the circuit to function reliably.

Primarily, the image that is projected from the film onto the scanners must be well resolved and accurately placed. The spacing between the infra-red LED and the CCD scanner is calculated to give acceptable resolution (the arrangement approximates a point source casting a shadow from the film onto the sensor), and correct magnification for the film used. Furthermore, the LED must be aligned so as to illuminate the scanner evenly.

Placement of the projected image onto the scanner is critical and so the scanner and film guide are aligned and bonded together to ensure that the film does not wobble, the projected image is within the top and bottom range of the line scanner, and the image is not tilted with respect to the scanner's aperture. It should also be noted that this alignment is dependent upon the image photographed onto the microfilm remaining within accurate placement tolerances. In order to achieve accuracy of one scanner pixel (25 microns) on the final microfilm, a placement accuracy of better than 1 mm is required on the original artwork (assuming a x32 reduction from the artwork to the final film image).

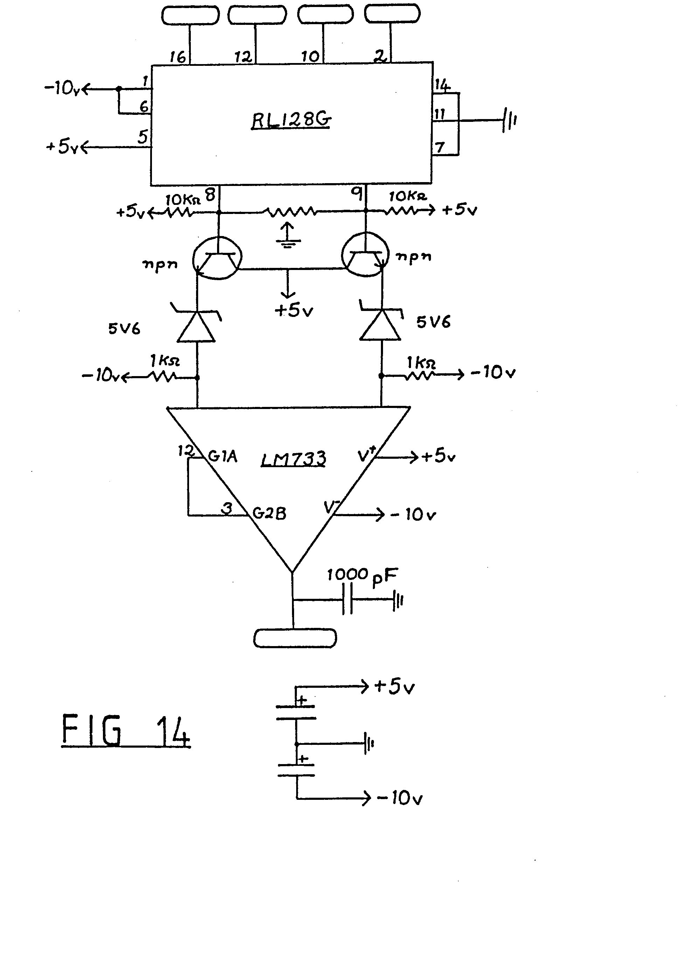

The preferred CCD sensor is a Reticon RL128G element linear image sensor (See Figure 14). This scanner is used in conjunction with its internal buffer amplifiers to produce a differential voltage output. With the appropriate clock, gate and start signals being fed from the digital circuitry, this output reflects the charge on each scanner element, and is reset to a fixed base between each sample.

The differential output is buffered by two npn transistors and then voltage offset by zener diodes to bring the resulting signal into the LM733 differential amplifier's operating region. This amplified output (gain=100) is then fed to the comparator in the digital section. Since DC offset may vary appreciably across this stage, a preset potentiometer is used to ensure that the final output is within the comparator's tracking range (0 to 2.5 volts), for allowable variations in supply voltage, light intensity, and operating temperature.

Since this section is sensitive to induced noise, care should be taken with its layout and grounding. In addition, a grounded shield is preferably installed between the electronic circuitry and the outer case, to prevent any hand capacitance effects due to the close proximity of the operator while film is being pulled through the guide.

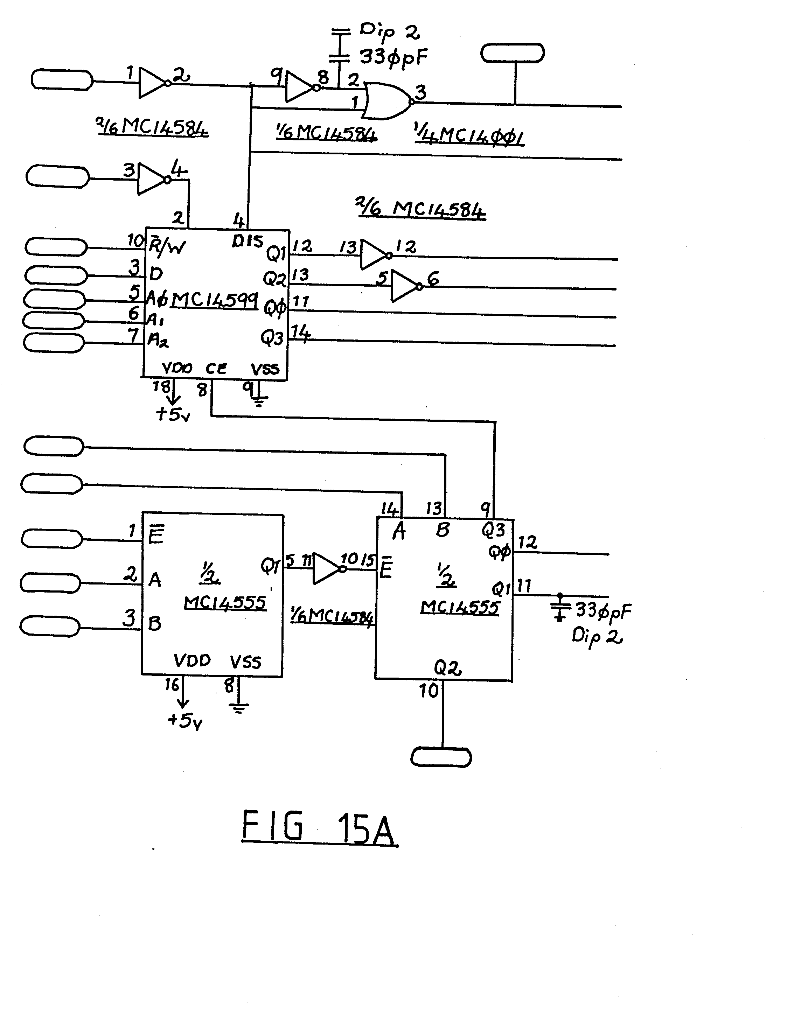

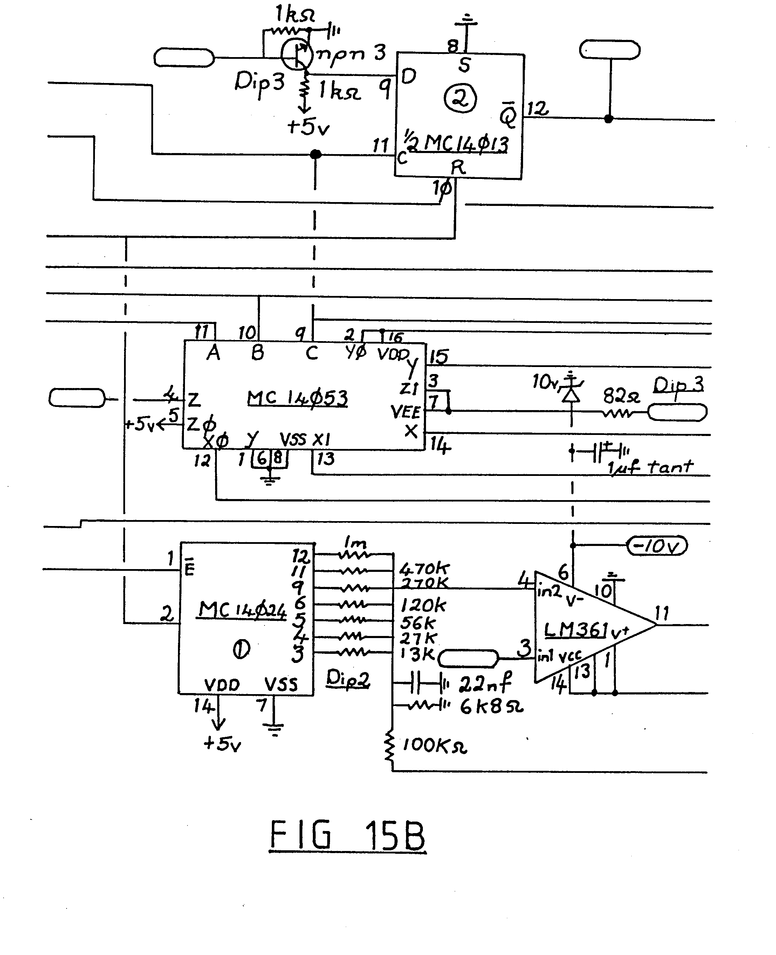

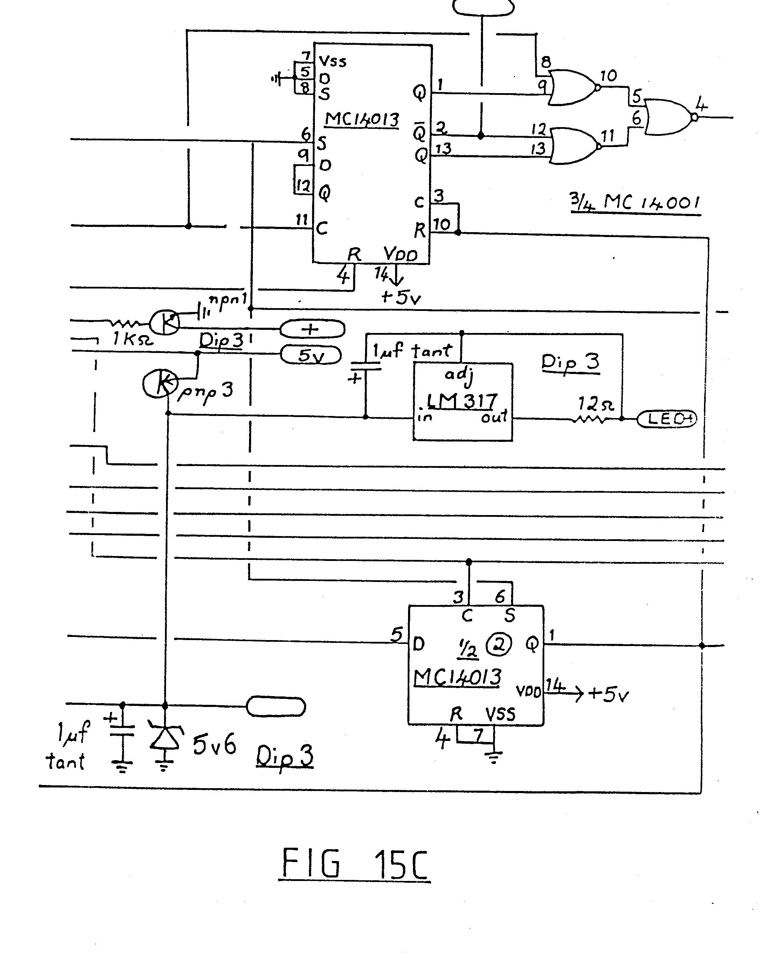

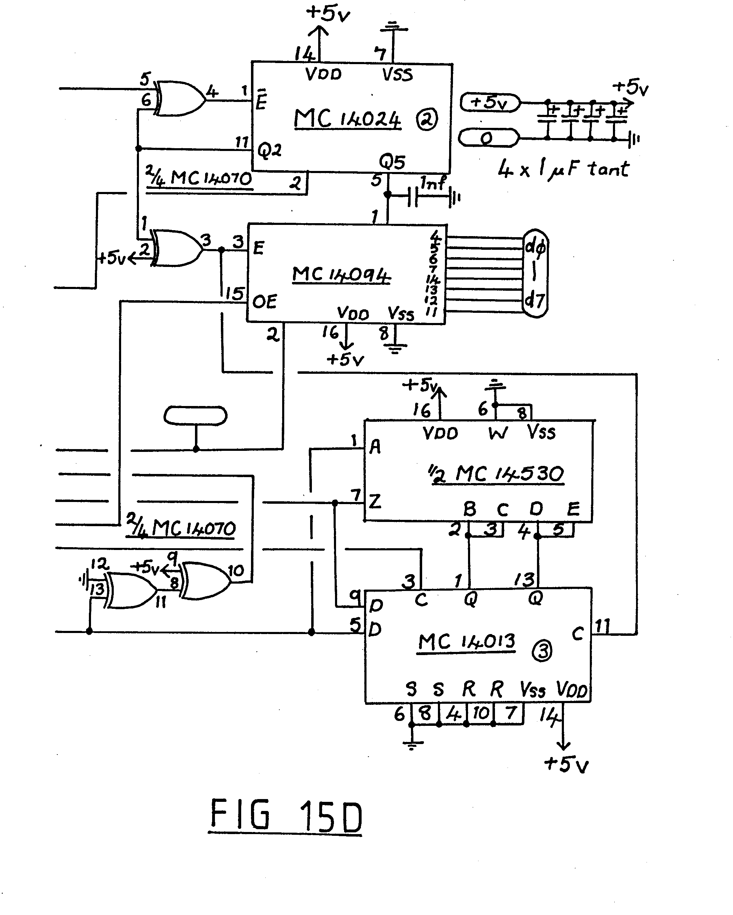

The digital circuitry (shown in Figure 15) contains power switching circuitry to minimize the drain on the batteries from high current devices (notably the analogue section and the infra-red LED). The primary five volt source is taken directly from the host computer's batteries (not normally switched) and is used to power the infra-red LED as the host computer's normal logic supply cannot provide sufficient current. In addition, a separate switched battery source is provided for the analogue section (two 7.2 volt nickel-cadmium batteries) and regulated to -10 volts.

Active current is typically 150 mA from the host computer battery, 50 mA from the host computer logic supply and 50 mA from separate batteries.

The host computer interface comprises an MC14555 address decoder and an MC14599 addressable latch. The decoder defines the address map for this section by generating strobes for access to all onboard devices, while the latch maintains the necessary system control signals.

The host computer clock (E) is delayed and gated with its inverse to produce the main system clock, which has a short mark space ratio as required by the scanner circuitry.

The start pulse to initiate a 128-cycle span is automatically generated from the scanner's end pulse (amplified by transistor npn3, Figure 15B) and latched for the next clock cycle by flip flop circuit element MC14013-2. This flip flop element is reset via the control latch on power-up, to ensure that the scanner's automatic start-end sequence begins correctly.

The output from the analogue circuitry is fed to the LM361 comparator together with the tracking threshold. This threshold is generated by an MC14024 counter and resistor network, providing a tracking range from 0 to 2.5 volts, approximately. This counter is reset on power-up, and counts up only, decrementing being accomplished by wrap-around incrementing. The comparator output is latched by the flip flop MC14013-2 at the appropriate clock phase and is cleared by the start pulse to ensure that data does not carry over from one scan to the next. The latched output is also fed back to the threshold input via a simple RC network proving mild feedback to compensate for the scanner's imperfect resolution. This feedback biases the comparator slightly towards detecting the opposite polarity of data to that which it last saw.

The MC14053 analogue multiplexer is controlled by the addressable latch, and has three separate functions. Firstly, it switches power from the batteries, turning on high current devices only during a scan. This is accomplished via the transistor pnp3, which allows current to be drawn directly from the host computer's battery. The 5.6 volt zener acts as an overvoltage protector. The main CMOS circuitry is powered as long as the host computer is turned on and, in addition, the MC14053 is continuously powered from the host computer battery to ensure that the power on-off circuitry functions correctly. (This draws a small current, measured only in microamperes, in the quiescent state.)

The MC14053 also switches between two data sources, normal latched data from the flip flop (via a compensated delay), and data from the "glitch" circuitry described below. The selected data are then fed to the output shift register.

Thirdly, the MC14053 generates the scanner's gate control signal from the clock. This is done in order to achieve the required swing from -10 volts to +5 volts.

The two separate 7.2 volt nickel-cadmium batteries provide -10 volts via a resistor and a zener diode. This is switched by the power-on control signal via the transistor npn1, which connects the positive terminal of the battery to system ground only when power is required. Both battery terminals are also connected to an external socket to permit convenient recharging (at a maximum of 10 milliamps).

A constant current generator using an LM317 provides power to the infrared LED. This ensures that scanner illumination will not fluctuate with varying battery voltage.

Data to the MC14094 shift register are clocked in and latched during four of these eight clock pulses to allow a window during which the host computer may read its outputs (normally tristate) via an address strobe. This is accomplished with the MC14024-2 counter and MC14070 XOR gates which generate a ÷3 clock to the shift register from the synchronized system clock.

The ÷3 operation is performed because each data element corresponds to three scanner pixels, and thus the data clocked into the shift should comprise every third pixel. However, it is obviously critical that the correct one of the three be selected, and this synchronization between the system clock and the sampled film data is achieved with the MC14013-1 and MC14001 gating.

The circuit is arranged so that after a start pulse, the synchronized clock is low and remains that way until the latched data signal falls (known as the critical edge). At this time, selection circuits (NOR gates) feed the NOT-E/2 (i.e., the inverse of the clock signal E, divided by two) output from the toggle flip flop circuit to the synchronized clock output, and this continues until the latched data signal rises again (denoting the end of the critical pulse). This edge clocks the flip flop to allow normal NOT-E to be fed to the synchronized clock, which continues throughout the remainder of the scan. The result of this operation is that the final ÷3 sample clock fed to the shift register is exactly synchronized with the centre of the film's data pulses.

This synchronization is optimal if the critical data pulse is the ideal three pixels wide (since the sample clock is synchronized to the middle pixel) but, because of dust, sensor nonuniformity, and so on, it may be only two pixels, or even one pixel wide. A double pixel poses a special problem as there is no correct centre pixel to choose. In this case the circuit synchronizes to the right-hand pixel by default. However, this could conceivably bias the sample point to the right of its optimum for subsequent samples, and this possibility is handled by the glitch circuitry.

```
                          :     :     :     :     :     :
latched data              :     :     :     :     :     :
intervals             1 : 2 : 3 : 1 : 2 : 3 : 1
                          :     :     :     :     :     :
samples:                          ↑                 ↑
```

As shown in the table above, a right hand sample bias could result in sampling after interval 1 instead of interval 3, thus missing a data pixel that may have occurred only during intervals 2 and 3. The glitch circuit compensates for this by producing an output according to the following table:

| S | 2 | 3 | out |
|---|---|---|-----|
| 0 | 0 | 0 | 0 |
| 0 | 0 | 1 | 1 |
| 0 | 1 | 0 | 1 |
| 0 | 1 | 1 | 1 |
| 1 | 0 | 0 | 0 |
| 1 | 0 | 1 | 0 |
| 1 | 1 | 0 | 0 |
| 1 | 1 | 1 | 1 |

(S is the previous sample that was latched by the output shift register.)

Thus, any left hand data "glitches" that would otherwise have been missed are recovered. This is accomplished by flip flop MC14013-3 and majority gate MC14530. The flip flop latches intervals S and 2 while the majority gate produces the appropriate weighted output to be used in place of interval 3.

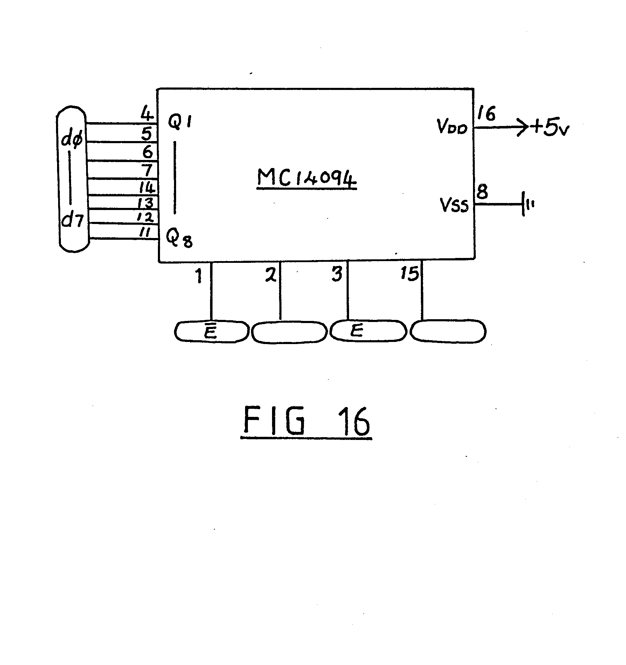

While the normal circuit samples one in three scanner pixels, it is possible to modify the hardware and the software to sample every pixel for diagnostic purposes. The scan adapter (Figure 16) consists of an MC14094 tristate shift register which samples every latched data pulse and may be addressed by the host computer (using "test" strobe).

If it is plugged into the test socket (Dip-5), then high speed software may be used to build up an analogue picture of the current scan line for digital oscilloscope diagnostic functions, by incrementing the comparator threshold between each digital scan (to yield a sixteen-level "analogue" display).

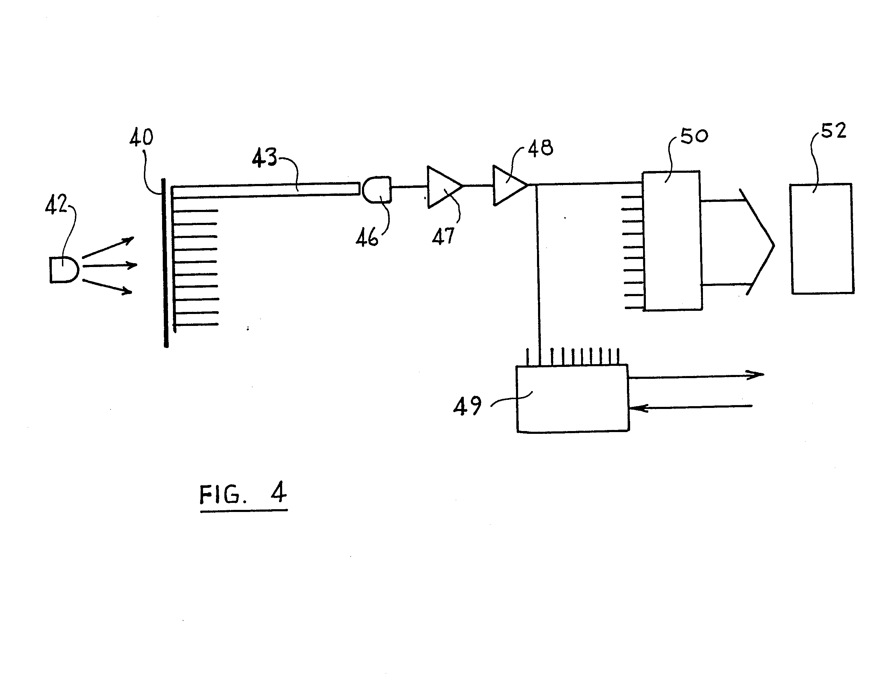

Figures 4 and 6 illustrate an alternative arrangement of data loader of the invention. In this embodiment the film 40 (shown also in Figure 5) is again passed through a film guide 41 between a light source 42 and a detector, in the drawing shown as a ribbon 43 of light fibres. There may, for example, be eleven separate optical fibres, each typically in the form of a discrete ribbon 44, 1 mm wide and 45 microns thick, as shown in Figure 7. There is a narrow slot in the side of the housing of the film guide 41, through which light passes to enter the the light fibres.

Each fibre or ribbon leads to a respective photodetector 46. The photodetector generates a signal which passes through an amplifier 47 to a respective Schmitt trigger 46. The signal is compared against a clock and parity checker 49 and passed via a latch 50 to a host computer 52.

The electronic circuitry 46 to 50 could all be located on a single chip 53 located on a stage 54 affixed to the film guide 41.

The film itself, as shown in Figure 5, comprises a strip of ordinary 16 mm film bearing a plurality of pixels 56, each typically 1 mm by 50 microns. The pixels are typically arranged in rows, the first row 60 comprising clock pulses, the next four rows 61 to 64 comprising data, the next row 65 comprising parity check data, the next four rows 66 to 69 comprising data, and the last row 70 being clock pulses again. The symmetry of this format allows a film strip to be inserted into the data loader and pulled through it, either way up and from either direction. There are eleven rows of pixels, corresponding to the eleven detector circuits as described above with reference to Figure 4.

Figure 8 illustrates the internal arrangement for an optical data loader using a film disk. The disk is typically held within an optical cartridge 80, arranged to be mounted between a light source 81 and a light sensor 82. The sensor 82 generates a signal which is fed via an amplifier 83 to an analogue-digital converter 84 and thence to a digital preprocessor 85. It is then fed as digital program data to a host computer 89.

The computer also operates a motor control 90 which controls the operation of two electric motors 91, 92, in much the same way as is done at present for a magnetic floppy disc drive for example. For a dual disc cartridge, each motor operates a respective disc. Alternatively, for a single-disc cartridge, one motor operates the disc and the other operates the optical head assembly.

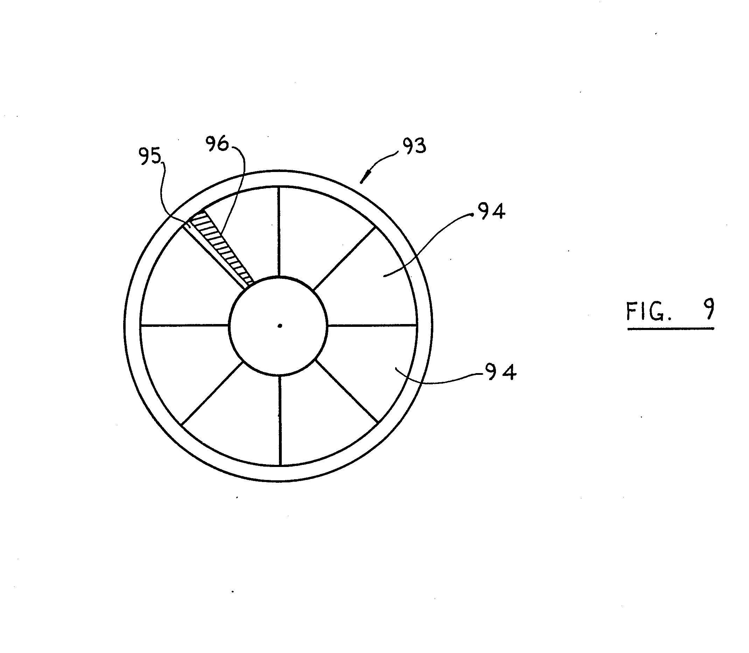

A typical disc 93 (see Figure 9) is divided into a plurality of data sectors 94, each provided with a two-dimensional array of data, error control and clock pixels. Typically, there is a radially aligned critical edge 95 at one edge of the sector, and a radially aligned row 96 of clock data next to it.

Alternatively, there may be an analogue picture in one or more of the sectors, in place of the ordinary data pixels. Such a sector would, however, still be provided with a critical edge 95 and clock data 96.

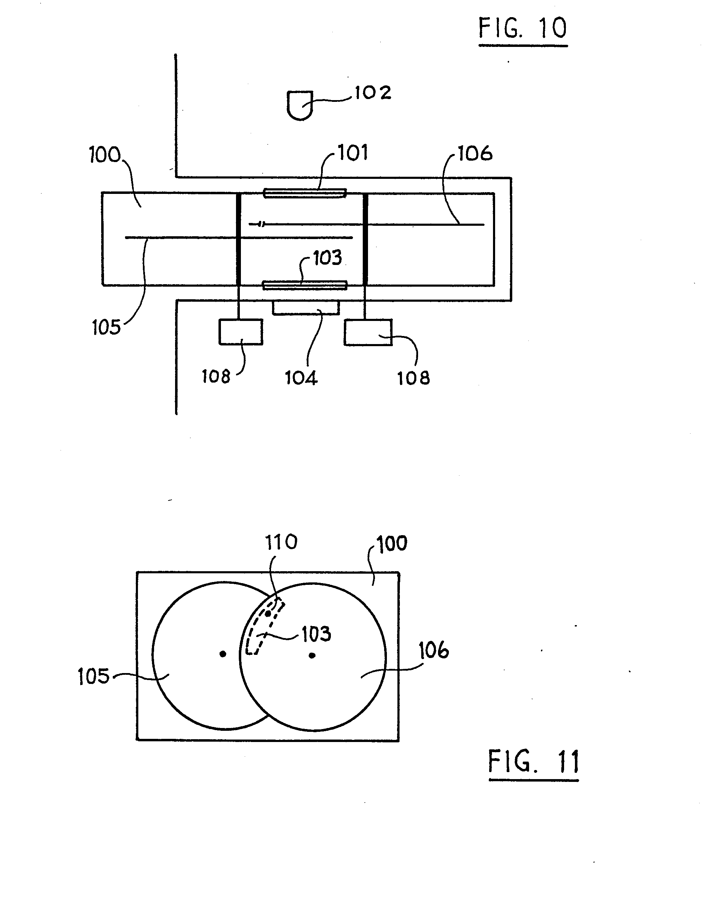

Figure 10 illustrates the physical layout of one form of optical loader using a disk as described with reference to Figures 8 and 9. In this embodiment, the cartridge 100 (also shown in Figure 11) is placed with a window 101 facing a light source 102. A second window 103 on the opposite side of the cartridge faces a light sensor 104.

Within the cartridge there are two discs. One disc 105 comprises a data disc while the other disc 106 is an "optical pickup" disc. The discs are mounted on spindles 107, arranged to be engaged and driven by motors 108.

The optical pickup disc 106 is provided with an aperture 110, which controls the selection of information on the data disc 105 which is to be picked up by the sensor 104. As the disc 106 rotates, the aperture moves from a position above one track to a position above another track of the data disc.

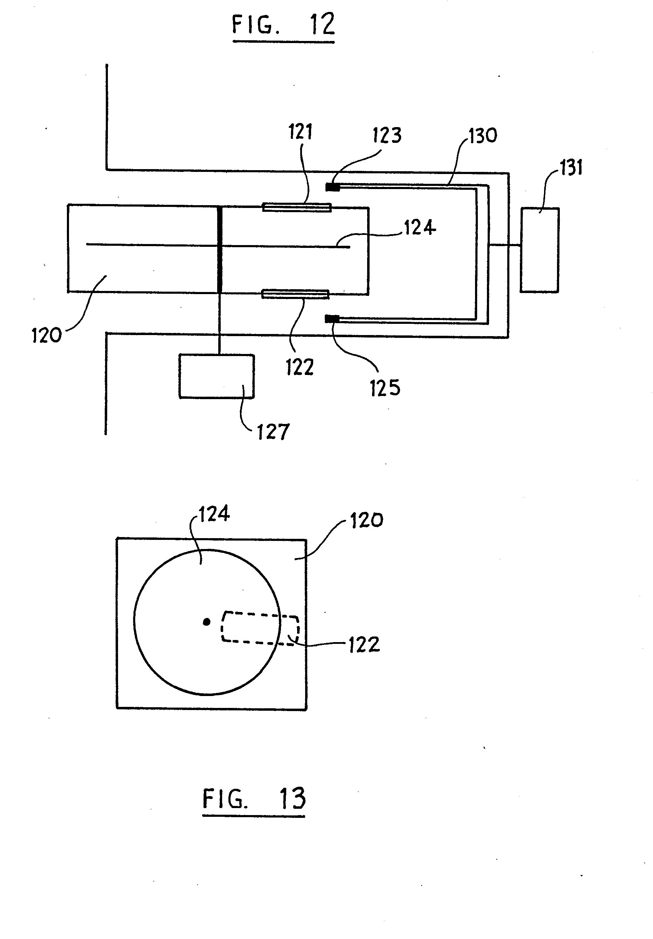

Figure 12 illustrates the physical layout of an alternative arrangement using disc cartridges. The cartridge 120 (Figure 13) is provided with windows 121, 122, so that light can pass from a light source 123, through the windows and through a disc 124 within the cartridge, to a light sensor 125. The beam of light from the source 123 must be collimated or focussed, so that light reaches the sensor 125 via only one pixel at a time of the data disc 124.

The disc is mounted on a spindle 126 arranged to be engaged and driven by a motor 127. The source 123 and sensor 125 are mounted on a frame 130 arranged to be manipulated by a motor 131 to control the choice of data track to be read by the source-sensor assembly.

The suggested implementations of the invention are now briefly discussed as follows:

1. Software Loader

In this preferred embodiment of the invention as disclosed in the drawings, a software loader is used to replace ROM packs and cassettes which are presently used for interchangeable video games and other mass produced software programs for personal computers.

The advantages of this system are that an optic loader may be plug-in compatible with a conventional ROM pack, as shown for example in Figure 1 of the drawings, and manufactured for approximately the same cost. However, the medium or software program can be produced for only a few cents. Thus, one software loader and retrieval apparatus could be purchased for the price of a conventional ROM pack and additional games or other programs may be loaded through the software loader into the video game apparatus or personal computer.

Typically, the data is stored in two-dimensional digital format on a 16mm strip (up to, say, 300 mm in length) of microfilm, and, in one low cost version, is simply moved past the linear scanner by hand. This yields a load time of less than five seconds for a typical game of, say, 8 kilobytes with complete error checking and double redundancy. The significant advantages are the storage of analogue and digital information to be retrieved in digital form. Because the optical reader plugs into the game apparatus or computer in the same manner as a normal ROM pack, it can be interchangeable with existing packs,to preserve the utility of existing hardware.

As shown in Figure 3, the general internal mechanism for the design includes a direct light source, such as a light emitting diode (LED), positioned far enough away from the film to act like a point source (producing effectively parallel light), projecting the film's image accurately onto the scanner. The intensity variation is picked up by the scanner. The signals are then amplified, the light-dark threshold detected, and the appropriate digital data fed into a shift register and transferred in parallel form to the host processor.

The host processor is required to process the data to reconstruct the film pattern while offering as much speed and alignment independence as possible.

In applications where software security is desirable, there are two ways in which the data may be encoded in order to load correctly on a single user loader. One simple form is to punch a digit code onto the film leader as it is dispensed to the customer, this code matching the pattern built into his software loader (defined by its serial number). For more secure applications the entire data block may be uniquely encoded at the time of manufacture by a public key algorithm. While this second alternative might not be convenient for large scale mass production, it could be streamlined by processing through an automatic vending machine at the retail level.

The method of retrieval of information of the present invention has two possible alternatives for analysis in a host processor. These are as follows:

(a) Storage-analysis - By this arrangement, the host processor will store all of the information received from the scanner, and subsequently retrieve it for analysis. This arrangement has the disadvantage that considerable excess capacity is required where the medium is moved at random speed past the scanner so that there is multiple reading of the information. It is therefore a less preferable alternative than the following, namely:

(b) Analysis-storage - The preferred embodiment provides for the information to be analysed by the supporting electronics of the scanner immediately upon receipt, and prior to storage, so that the stored information is then accurately read and analysed information in a form suitable for any host processor.

The preferred arrangement of the analysis method and apparatus is as follows:

The clocking region is used to ensure that each line is received only once, and that the lines are received in numerical order. In one preferred embodiment the data block is an eight-line block of information interspaced by an appropriate address line. By this arrangement, all duplicated material is discarded. Thereafter, alignment of the information is accurately checked and, in the event that the information satisfies all three requirements concerning error control, clock, and address registers, it is stored or further processed by the host processor.

2. Electronic Book

The electronic book has the widest potential of all the applications proposed herein. It is possible to store up to 2 million bytes (equivalent to a large novel) on a single 150 mm x 100 mm (microfiche sized) piece of film using a two-dimensional array and costing less than twenty cents (1984) to manufacture. This system therefore provides an arrangement a hundred times more compact than conventional printed matter. It may also be cheaper to use when averaged over the price of a large number of texts.

The system could also be adapted to provide automatic electronic search and retrieval by appropriate seek operations. It also enables the storage of high quality pictures in analogue form for digital retrieval. It is considered that one possible arrangement for this type of storage could be the use of photochromic film which is capable of being written and read back without wet processing, fixing being accomplished by exposure to normal light, or by thermal methods. This enables the book reader to function also as a writer to store material of the owner's choice.

Adaptations of this device could be used, for example, in electronic map displays for use in automobiles, or in many other applications.

3. Digital Audio Systems

The advantage of the high quality analogue storage capability of film, as one preferred optical medium, in combination with the reading capabilities of the present invention, such as in the software loader described above, enable high quality reproduction of digital audio music. The software loader could be made compatible with current technology amplifiers with an analogue output.

By taking advantage of the high quality analogue storage capability of film, combined with digital tracking, and correction techniques, it is possible to store one side of a standard long-playing record (twenty minutes) on a 300 mm length of standard 16 mm microfilm. This system should be capable of 16 bit (96 db) dynamic range, and be completely impervious to rumble, wow, flutter and the like, even in portable units. Film is considerably cheaper to produce, and smaller in volume, than conventional records.

4. Archival Data Base

This arrangement is similar to the electronic book arrangement and the media could be made to be interchangeable. The difference is at the archival unit which is effectively a very large sorter/feeder with a wet film processor attached. Thus, information (such as pictures or digitized text from word processors or the like) could be fed directly onto film for permanent retention and recovered within ten seconds for viewing and/or copying. Copies of the information may be made very cheaply and taken away for viewing in portable book readers if required, a feature that is not possible with existing technology, such as laser systems.

5. Computer Data Base

This application is a further extension of the archival data base with substantial computer power added to provide a very large (terabyte) computer accessible data base. The basic problem with the archival approach is that its access time (up to ten seconds) is unacceptable for high speed computer systems. This may, however, be largely circumvented by utilizing a very large RAM buffer. By use of appropriate software algorithms it is possible to operate this combination to give a typical access time of the order of nanoseconds, and do block accesses to the slow film reader only on rare occasions. Such a system could be useful in many traditional main frame computer configurations , such as for airline bookings.

6. Interactive Video Games

Since pictorial information can be combined with digital program data, new types of games, such as "Adventure", can be introduced that would have,

been impractical previously without discs. This type of development is likely to have the effect of extending the life of existing video game products well beyond the current commonly-held two-year projection.

7. Computer-Aided Instruction

This is useful for any system where pictures (typically stored as analogue images) are presented, questions asked, and responses evaluated, with the process continuing based on the user's responses. Examples include job training, simulation, and educational applications.

8. Merchandising

Acting as an electronic salesman, the optical system could show product pictures and information based on user responses, with a very low cost system capable of being changed on a weekly or even daily basis if required (by changing the film cartridge, for example). Typical applications include real estate, car sales, and so on.

9. Digital Audio and Movies

The digital information on the medium could be read by the electronic equipment as a digital audio signal. This may, if desired, be interspersed with analogue picture information, or provided in a separate track on the medium from analogue picture information, to provide an audio-visual display, with either still or moving pictures. Still and moving pictures could be interspersed, depending on the nature of the material recorded.

It will be by now appreciated that the invention enables the convenient storage of information in an optical medium, and for efficient retrieval of that information in an electronic or computer usable form. The method and apparatus of the invention have the particular advantage of economy in manufacture and use and enable convenient storage and retrieval of information for a wide variety of applications.

Finally, it is to be appreciated that the invention has been described by way of preferred embodiments and examples only, and that modifications, alterations and additions may be made to the invention without departing from its scope as defined in the accompanying claims.

0130391

WHAT WE CLAIM IS:

1. A method of retrieving information from an optical medium comprising a plurality of discrete increments of recorded information defined by variations in opacity in a two-dimensional array, the method comprising the steps of moving the optical medium relative to a one or zero dimensional scanner capable of receiving light from said optical medium.

2. A method of retrieving information, the method comprising the steps of:

(a) providing an optical medium comprising a plurality of discrete increments of recorded information defined by variations in opacity;

(b) providing a light source to illuminate said optical medium;

(c) providing a zero or one dimensional scanner capable of receiving light from said medium and adapted to develop an electronic signal corresponding to the discrete increments of recorded information;

(d) moving the medium relative to the scanner to receive the information; and

(e) transferring said received information from said scanner for analysis.

3. A method of storing and retrieving information in an optical medium, the method comprising the steps of:

(a) providing an optical medium with a two dimensional array of discrete increments of recorded information defined by variations in opacity, said two dimensional array including an address region, a critical edge or margin portion, a clock region, a data region including said recorded information and an error control region;

(b) providing a reader apparatus for said optical medium including a light source, and a zero or one dimensional scanner apparatus, being a single or multi-element light-sensitive device;

(c) illuminating said optical medium by said light source and moving said optical medium relative to said scanner apparatus to develop a charge in each element in said scanner, said charge being representative of the recorded information; and

(d) transferring said charges out of the elements of said scanner for further analysis.

4. A method as claimed in claim 1, 2 or 3, further comprising the step of using an analysis program to perform the following functions:

(a) Critical edge reading - to evaluate the position of the clock, data, and error control regions accurately;

(b) Clock region reading - to determine the position of the optical medium relative to the scanner for correct line by line processing of the information; and

(c) Error control reading - to detect correct and eliminate any errors;

and wherein the analysed information is transferred in processed format to memory or for further processing.

5. An optical medium arranged substantially in two dimensional form and including a data area on the medium comprising a critical edge section of data adjacent one edge of the optical medium, a clock region, a data region to receive recorded information, and an error control region, all of said regions being aligned with the critical edge section.

6. A medium as claimed in claim 5, wherein said data area is provided in the form of consecutive data blocks each including a plurality of lines of information.

7. A medium as claimed in claim 6, wherein each data block further comprises a preceding address line.

8.  A medium as claimed in claim 5, 6 or 7, further comprising a header or validity region adjacent to a commencement portion or end of said data area.

9.  A medium as claimed in claim 5, 6, 7 or 8, wherein the optical medium is a photographically prepared microfilm or a pressed or printed optical medium arranged in strip, roll, cassette, or card format.

10. An apparatus for retrieval of information stored on an optical medium, said retrieval apparatus including a light source, and a zero dimensional (single element) or one dimensional (multi-element) scanner adapted to develop a charge in each element, an amplifier for said charge, an analogue to digital converter, a shift register for transferring said charges out of said scanner device, and an analysis means as follows:

(a) critical edge processor - to evaluate accurately the position of clock data and error control regions of the medium;

(b) clock processor - to determine the position of the optical medium relative to the scanner for correct line by line processing of the information;

(c) error control processor - to detect, correct and eliminate any error; and

(d) means for transferring the analysed information in processed format to memory or for further processing;

the construction and arrangement being such that, in use, said optical medium is illuminated by said light source and moved relative to, and read by, said scanner to provide said information for analysis by the retrieval apparatus.

11. An apparatus as claimed in claim 10, wherein the retrieval apparatus provides for the optical medium to be moved within a region located between said light source and said scanner manually.

12. An apparatus as claimed in claim 10, including a controlled motive power source for moving the optical medium within a region located between said light source and said scanner.

13. An apparatus as claimed in claim 10, 11 or 12, comprising a software loader.

14. An apparatus as claimed in claim 10, 11 or 12, comprising an electronic book.

15. An apparatus as claimed in claim 10, 11 or 12, comprising a digital audio system.

16. An apparatus as claimed in claim 10, 11 or 12, comprising an archival data base.

17. An apparatus as claimed in claim 10, 11 or 12, comprising a computer data base.

18. An apparatus as claimed in claim 10, 11 or 12, comprising a video game device.

FIG.1

FIG 2

FIG. 3

FIG. 4

FIG. 5

FIG. 6

FIG. 7

FIG. 8

FIG. 9

0130391

FIG. 10

FIG. 11

FIG. 12

FIG. 13

FIG 14

FIG 15A

0130391

FIG 15B

FIG 15C

FIG 15D

FIG 16